# EUROPEAN PATENT SPECIFICATION

(11) **EP 2 261 887 B1**
(45) Date of publication and mention of the grant of the patent: **02.08.2017**
(21) Application number: 10164772.5
(22) Date of filing: 02.06.2010
(51) Int. Cl.: G09G 5/14, G06F 3/14

(54) **Assembled display device and display frame control method and system**
Montierte Anzeigevorrichtung und Anzeigerahmensteuerungsverfahren und System
Dispositif d'affichage assemblé et procédé de contrôle de cadre d'affichage et système

(30) Priority: 10.06.2009 TW 098119391
(43) Date of publication of application: 15.12.2010
(73) Proprietor: Nexcom International Co. Ltd., New Taipei City 235 (TW)
(72) Inventor: Chan, Yi-Hsin, Chung-Ho City, Taipei County (TW)
(74) Representative: Kurig, Thomas

(56) References cited:
- WO-A1-2009/031357
- US-A1- 2004 036 662
- US-A1- 2007 035 470
- US-B1- 6 501 441
- US-B1- 6 970 145
- US-B1- 7 400 333
- US-B2- 7 119 849
- LI K ET AL: "BUILDING AND USING A SCALABLE DISPLAY WALL SYSTEM", IEEE COMPUTER GRAPHICS AND APPLICATIONS, IEEE SERVICE CENTER, NEW YORK, NY, US, vol. 20, no. 4, 7 August 2000 (2000-08-07) , pages 29-37, XP000948493, ISSN: 0272-1716, DOI: 10.1109/38.851747
- BROWN M S ET AL: "A practical and flexible tiled display system", COMPUTER GRAPHICS AND APPLICATIONS, 2002. PROCEEDINGS. 10TH PACIFIC CO NFERENCE ON BEIJING, CHINA 9-11 OCT. 2002, LOS ALAMITOS, CA, USA,IEEE COMPUT. SOC, US, 9 October 2002 (2002-10-09), pages 194-203, XP010624903, DOI: 10.1109/PCCGA.2002.1167859 ISBN: 978-0-7695-1784-1

## Description

### 1. Field of the Invention

The present invention generally relates to a display frame control of a display device, more particularly to a display frame control method and system of an assembled display device.

### 2. Description of the Prior Art

A display wall is an assembled display device for visual data broadcasting, comprising a plurality of display frame blocks to form a large-scale display. Such display wall is usually found in airports, stations, commercial buildings, shopping malls, open signboards, etc. for showing real-time information or commercial advertisements.

An existing assembled display device is generally composed of a plurality of computer systems, each display screen is connected to a graphic controller of a computer mainframe via a visual interface, and a multimedia display program outputs image data to the display screen for presentation. Conventional graphic controller is able to control the display to present the image data in a full-screen mode. In case that an image is needed to be divided for presentation, the multimedia display program must process the image in advance. In addition, due the limited computer software/hardware resources, a single computer system is incapable of performing a plurality of image division on the display for presentation.

In order to support diverse image sources and types, transform various display types into video formats, perform image division and zooming processes on the image data, and flexibly control the basic display functions, display frames needs to be control by a plurality of computers, and the display operations of all computers are controlled by a display wall server. However, such control structure is not only complicated, but also requires enormous construction costs and maintenance fees.

Brown M. S. et al.: "A practical and flexible tiled display system", Computer Graphics and Applications, 2002, Proceedings of the 10th Pacific Conference on Computer Graphics and Applications, pages 194-203 describes a PC-cluster tiled display using casually positioned projectors running an OpenGL application, wherein camera based registration is used to attain a self-calibrating display geometry with real-time geometric corrections, for seamless displaying of the image.

Li K. et al.: "Building and Using a Scalable Display Wall System", IEEE Computer Graphics and Applications, 2000, vol. 20, no. 4, pages 29-37 concerns a system of several PC-clusters for displaying high resolution images partitioned into tiles and displayed by projectors.

US 6,501,441 B1 discloses an apparatus for partitioning, scaling and displaying video and/or graphics across several display devices including a video source, a master device and multiple display devices.

US 2007/0035470 A1 discloses an apparatus for providing multiple screens and a method of dynamically configuring multiple screens.

The problem to be solved in the industry is to simplify the control structure of an assembled display device, in order to reduce the system construction costs and increase the operation convenience and subsequent maintenance. The present invention is disclosed herein to solve the problem.

### 3. Summary of the Invention

In accordance with the present invention the problem is solved by a display frame control method according to independent claim 1 and a display frame control system according to independent claim 6; dependent claims define preferred embodiments.

In view of the aforementioned disadvantages and problems of the prior art, the primary objective of the present invention is to provide a display frame control method and a display frame control system. The present invention applies a display frame setup program to control a graphic controller to retrieve a specific area of a display frame content on a display frame corresponding to a designated image data, and to perform a zooming process on the specific area; in addition, the present invention enables a single computer system to perform the image division process on the display frame for presentation. Consequently, the present invention not only helps the reduction in system construction costs, but also the increase in the system maintenance for the convenience.

Therefore, the display frame control method and the display frame control system of the present invention enables the display frame setup program to acquire an external setup command, enables the graphic driving program to controls the graphic controller to retrieve the specific area of the display frame content corresponding to the designated image data to be outputted to the display screen, and then performs a zooming process on the specific area. In addition, the present invention enables the graphic controller to perform an image division process on the display screen for presentation to share the workload of the central processing unit (CPU), so as to enable the present invention to achieve the objective of performing the image division function via a single computer system. Consequently, the present invention not only helps the reduction in system construction costs, but also the increase in the system maintenance for the convenience.

Other and further features, advantages, and benefits of the invention will become apparent in the following description taken in conjunction with the following drawings. It is to be understood that the foregoing general description and following detailed description are exemplary and explanatory but are not to be restrictive of the invention. The accompanying drawings are incorporated in and constitute a part of this application and, together with the description, serve to explain the principles of the invention in general terms. Like numerals refer to like parts throughout the disclosure.

### 4. Brief Description of the Drawings

Fig. 1 illustrates a scheme view of a preferred embodiment showing a hardware system structure of a display frame control system of an assembled display device according to the present invention;
Fig. 2 illustrates a scheme view of the preferred embodiment showing a software system structure of the display frame control system of the assembled display device according to the preferred embodiment of the present invention;
Fig. 3 illustrates a system structure of a graphic controller according to the present invention;
Fig. 4 is a perspective view showing an enlarge view of a portion of a single display frame according to the present invention;
Fig. 5 is a perspective view showing the switch of display frames of an assembled display device according to the present invention;
Fig. 6 illustrates a flow chart of a display frame control method of the assembled display device according to the present invention;
Fig. 7 illustrates a flow chart of the display frame control method of the assembled display device according to the present invention; and
Fig. 8 illustrates a software system structure showing another preferred embodiment of the display frame control system of the assembled display device according to the preferred embodiment of the present invention.

### 5. Detailed Description of the Invention

The present invention provides an assembled display device and a display frame control system and a method thereof. The assembled display device is a tiled display wall(TDW), which is a large-scale display, consisting of a plurality of separate display screens, and is constructed to form a matrix of rectangle, square or other specific form.

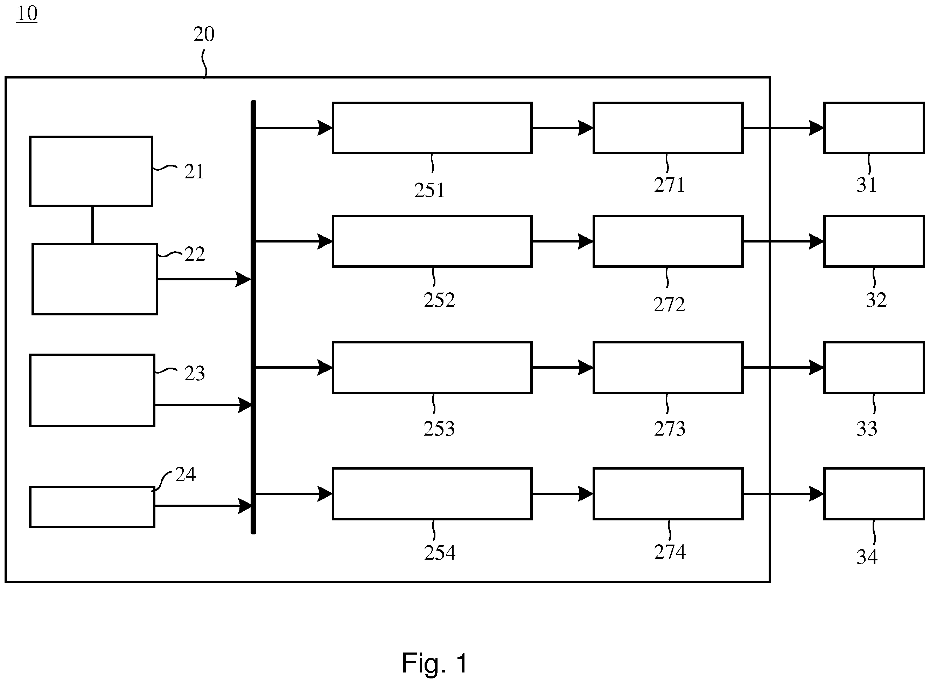

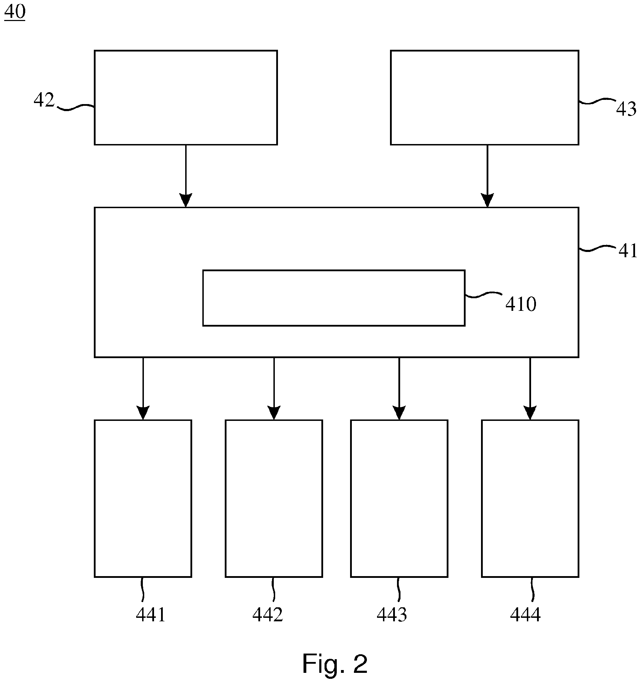

Fig. 1 is a scheme view of a preferred embodiment showing a hardware system structure of a display frame control system of an assembled display device according to the present invention. Fig. 2 illustrates a scheme view of the preferred embodiment showing a software system structure of the display frame control system of the assembled display device according to the preferred embodiment of the present invention. An assembled display device 10 of the present invention is installed in a computer system to apply the software and hardware resources to achieve specific effects based on the present invention.

With the reference to Fig. 1, the hardware of the assembled display device 10 comprises a plurality of display screens 31, 32, 33 and 34 and a display frame control system 20, which is constructed in a computer mainframe, comprising a central processing unit (CPU) 21, a System-on-Chip (SoC) 22, a system memory (RAM) 23, a video source 24, a plurality of graphic controllers 251, 252, 253 and 254 and a plurality of visual interfaces 271, 272, 273 and 274.

The central processing unit (CPU) 21 is the brain of the computer system and is coupled to the graphic controllers 251, 252, 253 and 254 via the bridge System-on-Chip (SoC) 22. The system memory (RAM) 23 cooperates with the central processing unit (CPU) 21 to properly process various operations and store data. The video source 24 is related to image data source and is able to be a data storage media for storing system files, CDs and HDDs, etc., in addition, to connect COM port for external image database transmission. Said image database is stored and transmitted in the video compression bitstream format, which conforms to a video compression standard as MPEG-1, MPEG-2, MPEG-4, H.264, etc. According to the video compression standard, each video image is divided into a plurality of display groups, which are composed of a plurality of frame data. During the transmission of the image data, the plurality of frame data are encoded and quantified, according to the video compression standard, and then, transmitted according to pre-set frame frequency. The graphic controllers 251, 252, 253 and 254 are respectively coupled with the display screens 31, 32, 33 and 34 through the visual interfaces 271, 272, 273 and 274 to acquire image data from the video source 24; subsequently, the data is decoded to a plurality of original frame data for zooming process, and then, the plurality of frame data are encoded into different signal formats that conform to the visual interfaces 271, 272, 273 and 274 respectively and outputted to the display screens 31, 32, 33 and 34.

The assembled display device 10 comprises one or a plurality of display screens. In the preferred embodiment, there are a total of four display screens 31, 32, 33 and 34 as an example. The display frame control system 20 corresponds to the four graphic controllers 251, 252, 253 and 254 and the visual interfaces 271, 272, 273 and 274, and the amounts of the components are not limited to the present invention. The graphic controllers 251, 252, 253 and 254 are coupled with the System-on-Chip (SoC) 22; nevertheless, the graphic controllers are able to be integrated in the central processing unit (CPU) and the System-on-Chip (SoC) or the plurality of graphic controllers are able to be packaged as a single module.

With reference to Fig. 2, a computer system comprises an operating system 41, a multimedia display program 42 and a display frame setup program 43. A plurality of graphic driving programs 441, 442, 443 and 444 are installed in the operating system 41 to individually activate the graphic controllers 251, 252, 253 and 254.

The multimedia display program 42 is an application program and installed in a computer system to open a user interface to acquire an image projection command, and then, control the graphic driving programs 441, 442, 443, and 444 to drive the graphic controllers 251, 252, 253, and 254 to output image data to the display screens 31, 32, 33 and 34, according to the image projection command. The display frame setup program 43 is another application program and installed in the computer system to control the retrieval of a specific area of a display frame content corresponding to the image data. When the display frame setup program 43 is activated, a user interface is opened to acquire a setup command, which comprises the detailed information on the specific area to be retrieved. The display frame setup program 43, based on the setup command, controls the graphic driving programs 441, 442, 443, and 444 to form control signals to be outputted to the graphic controllers 251, 252, 253, and 254. Subsequently, the graphic controllers 251, 252, 253 and 254, based on the control signals, the graphic controllers respectively retrieve a specific area of a display frame content corresponding to a designated image data to be outputted to the display screens 31, 32, 33 and 34, and perform a zooming process on the specific area according to respective display screen widths and heights, so that the specific area is able to be expanded to a full screen for presentation.

The operating system 41 comprises an application programming interface(API) 410 as the communication interface among the multimedia display program 42, the display frame setup program 43 and the graphic driving programs 441, 442, 443, and 444. When the multimedia display program 42 generates a system call after acquiring said image projection command, and controls the graphic driving programs 441, 442, 443, and 444 to drive the graphic controllers 251, 252, 253 and 254 for outputting the image data to the display screens 31, 32, 33 and 34 through the application programming interface(API) 410. Similarly, the display frame setup program 43 generates a system call after acquiring the setup command and controls the graphic driving programs 441, 442, 443, and 444 to form a plurality of control signals to be outputted to the graphic controllers 251, 252, 253, and 254 through the application programming interface(API) 410.

The design details of the display frame setup program 43 are prior arts. The persons skilled in the arts may compile suitable programs according to the descriptions of the present invention, the selections of different languages and the specific call commands of different format graphic driving programs to achieve required functions, so that the compiling of the display frame setup program 43 will not be described any further hereinafter.

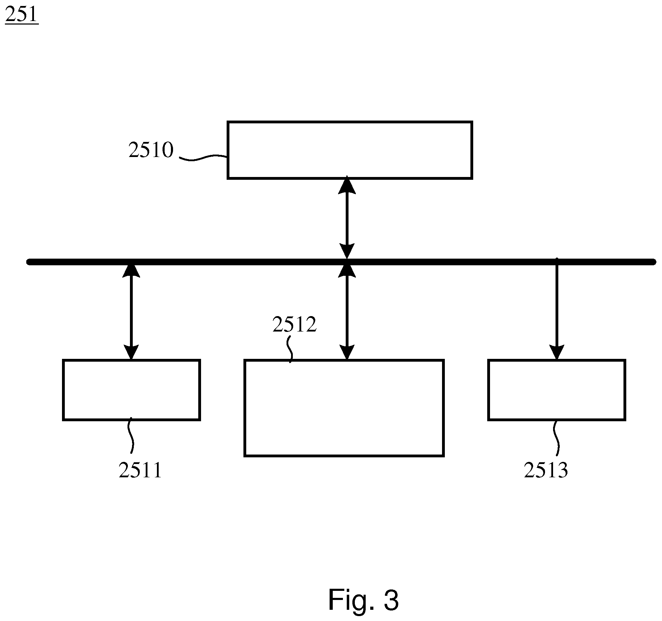

Fig. 3 illustrates a system structure of a graphic controller 251 according to the present invention. The graphic controller 251 includes a buffer memory 2510, a decoder 2511, a screen area zooming module 2512, and an encoder 2513. The buffer memory 2510 is to temporarily store data and an independent memory of the graphic controller 251 or memory resource of sharing the System memory (RAM) 23.

The image data from the video source 24 are temporarily stored in the buffer memory 2510; said image data include a plurality of compressed and encoded frame data. The decoder 2511 retrieves the image data from the buffer memory 2510 and decodes the image data into a plurality of original frame data, and then sends the plurality of frame data back to the buffer memory 2510 for temporary storage. The screen area zooming module 2512 acquires the plurality of original frame data from the buffer memory 2510 based on the control signals from the graphic driving program 441, and then, according to the information of the control signal, retrieves the image data corresponding to the specific area of a display frame content, continuously performs a zooming process on the specific area to enlarge the specific area, thus the plurality of original frame data are transformed to a plurality of target frame data to be sent back to the buffer memory 2510 for temporary storage. The encoder 2513 is to access the plurality of target frame data from the buffer memory 2510 and output the plurality of target frame data to the display screen 31 after the plurality of target frame data are encoded in the transmitting signal format of the visual interface 271.

A conventional graphic controller does not equip with a screen area zooming module, but simply can perform a zooming process according to respective the widths and heights of a display screen, so that the display frame content corresponding to the image data is able to fit with a display screen.

The graphic controllers 251, 252, 253, and 254 of the present invention respectively comprise an individual screen area zooming module. Each graphic controller transmits the plurality of original frame data into a plurality of target frame data based on the control signal requirement so as to retrieve the specific area of the display frame content corresponding to the image data and perform a zooming process on the specific area for presentation in conformity with respective the widths and heights of the display screen by their respective graphic controllers. The present invention enables the image division process to be performed by the graphic controllers 251, 252, 253, and 254 to share the workload of the central processing unit (CPU), so that the present invention can achieve the objective of performing the image division function via a single computer system.

The screen area zooming module of the present invention applies a digital signal processing technology to perform the retrieval of a specific area and a zooming process on a designated image. The screen area zooming module only selects the data corresponding to the specific area from the buffer memory, and performs the zooming process to the selected data so as to generate a plurality of target frame data. The zooming process for a display frame is able to be achieved by a wave filter.

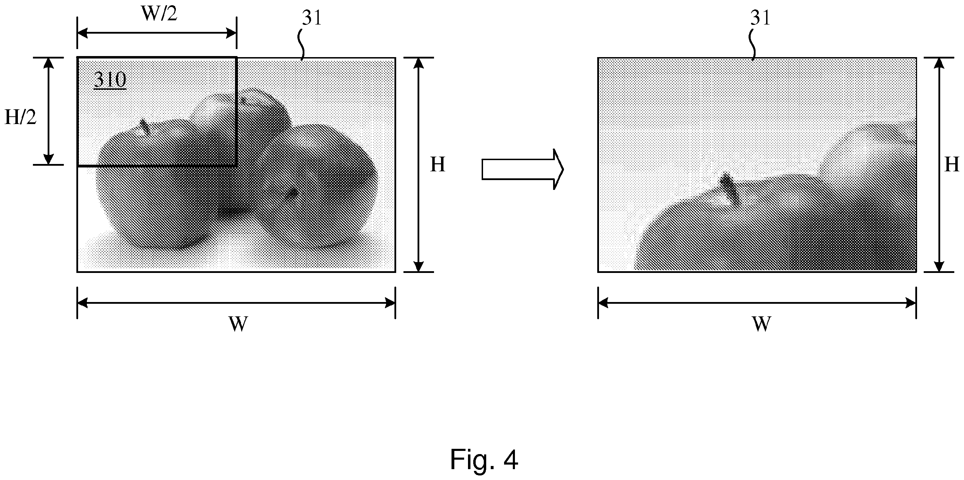

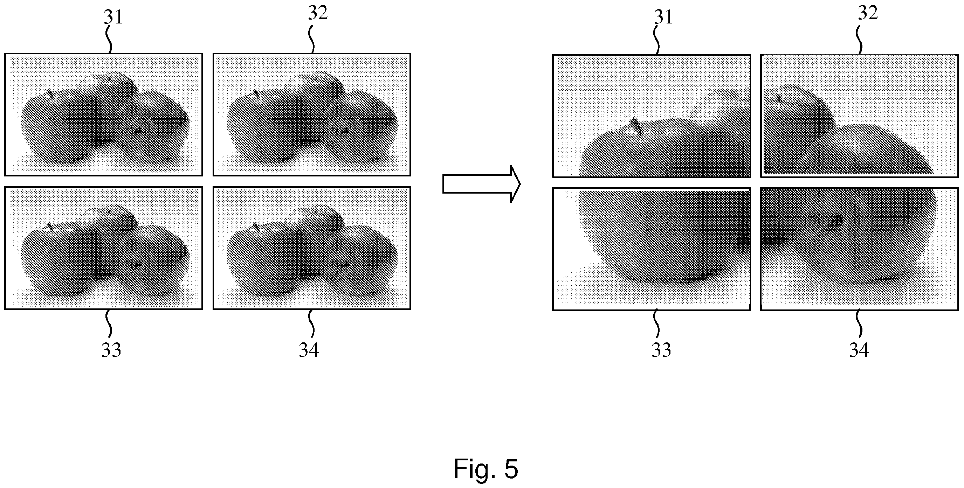

Fig. 4 is a perspective view showing an enlarge view of a portion of a single display frame according to the present invention; Fig. 5 is a perspective view showing the switch of display frames of an assembled display device according to the present invention.

With reference to Fig. 4, a display 31 comprises a screen height H and a screen width W. When a specific screen area 310 on the quarter area of the upper left of the display screen 31 is selected for presentation as a full screen, the information, the location coordinates, dimensions, etc., of the specific area 310 is inputted via the display frame setup program 43 to assemble a setup command. Generally speaking, the location coordinates on the upper left of a display frame is (0, 0) and the resolutions of the screen height H and screen width W are in pixels. In the preferred embodiment, the location coordinates on the upper left of a display frame (0, 0) and the dimensions of (W/2xH/2) are inputted through the user interface of the display frame setup program 43 to form a setup command. The specific area 310 of the display frame content corresponding to the image data is retrieved by the graphic controller 251; subsequently, the specific screen area 310 is enlarged and expanded to be presented on a full screen that is conformed to the display screen 31. Hence, the specific area 310 is able to be presented in a full-screen mode on the display screen 31.

With reference to Fig. 5, the location coordinates (W/2, 0), (0, H/2), (W/2, H/2) of the specific areas of the respective display screens 32, 33 and 34 on the upper right, lower left and lower right of a display frame content corresponding to the image data are inputted with the same screen dimensions (W/2xH/2). Therefore, the display screens 31, 32, 33, and 34 are able to present a full image data.

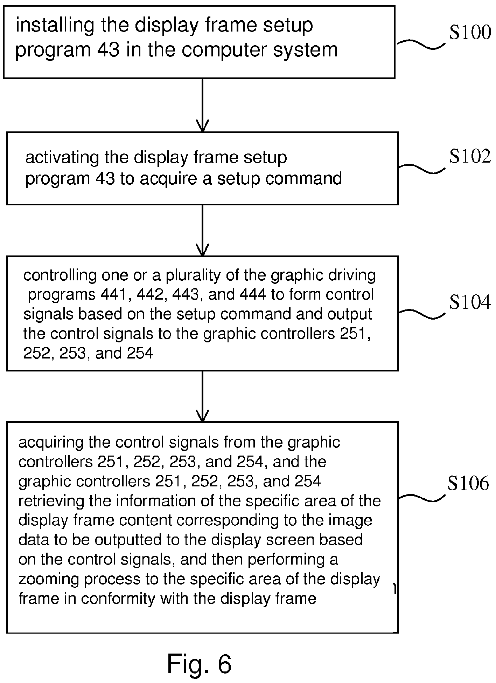

A display frame control method of the present invention is applicable to an assembled display device. With reference to Fig. 6, which illustrates a flow chart of the display frame control method of the assembled display device according to the present invention, and please refer to Fig. 1 and Fig. 2 for the structure of the system. The display frame control method of the invention is installed in a computer system and applied to an assembled display device 10. The assembled display device 10 includes the graphic controllers 251, 252, 253, and 254 to output the image data to the display screens 31, 32, 33, and 34. The display frame control method comprises the following steps of:
- installing the display frame setup program 43 in the computer system (S100);
- activating the display frame setup program 43 to acquire a setup command, which comprises the information of a specific area of a display frame content corresponding to the image data (S102);
- controlling one or a plurality of the graphic driving programs 441, 442, 443, and 444 to form control signals based on the setup command and output the control signals to the graphic controllers 251, 252, 253, and 254 (S104), respectively; and
- acquiring the control signals from the graphic controllers 251, 252, 253, and 254, and the graphic controllers 251, 252, 253, and 254 retrieving the information of the specific area of the display frame content corresponding to the image data to be outputted to the display screen based on the control signals, and then performing a zooming process to the specific area of the display frame in conformity with the display frame (S106).

Prior to S102, there are the steps of: installing a multimedia display program 42 in the computer system; activating the multimedia display program 42 to acquire an image projection command; and based on the image projection command, controlling the graphic driving programs 441, 442, 443, and 444 to drive the graphic controllers 251, 252, 253, and 254 in order to output the image data to the display screens 31, 32, 33 and 34 for presentation.

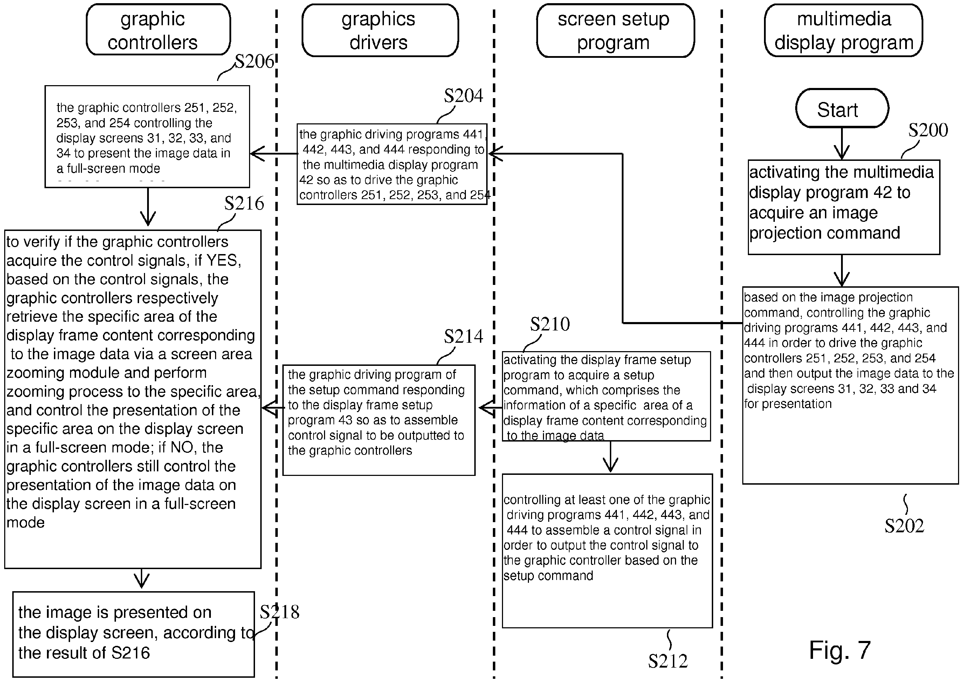

Fig. 7 illustrates a flow chart of the display frame control method of the assembled display device according to the present invention. In the preferred embodiment, the steps are of activating the multimedia display program 42 to acquire an image projection command (S200); based on the image projection command, controlling the graphic driving programs 441, 442, 443, and 444 in order to drive the graphic controllers 251, 252, 253, and 254 and then output the image data to the display screens 31, 32, 33 and 34 for presentation (S202); the graphic driving programs 441, 442, 443, and 444 responding to the multimedia display program 42 so as to drive the graphic controllers 251, 252, 253, and 254 (S204); and, the graphic controllers 251, 252, 253, and 254 controlling the display screens 31, 32, 33, and 34 to present the image data in a full-screen mode (S206).

On the other hand, the other steps are of activating the display frame setup program to acquire a setup command, which comprises the information of a specific area of a display frame content corresponding to the image data (S210); controlling at least one of the graphic driving programs 441, 442, 443, and 444 to assemble a control signal in order to output the control signal to the graphic controller based on the setup command (S212); and subsequently, the graphic driving program of the setup command responding to the display frame setup program 43 so as to assemble control signal to be outputted to the graphic controllers (S214).

After S206, the step is to verify if the graphic controllers acquire the control signals, if YES, based on the control signals, the graphic controllers respectively retrieve the specific area of the display frame content corresponding to the image data via a screen area zooming module and perform zooming process to the specific area, and control the presentation of the specific area on the display screen in a full-screen mode; if NO, the graphic controllers still control the presentation of the image data on the display screen in a full-screen mode (S216); at last, the image is presented on the display screen according to the result of S216 (S218).

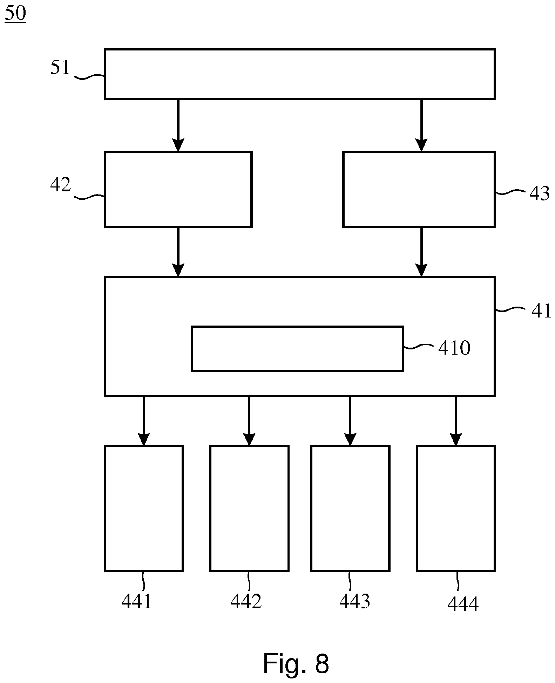

Fig. 8 illustrates a software system structure showing another preferred embodiment of the display frame control system of the assembled display device according to the present invention. In the preferred embodiment, a display frame control system 50 further comprises an assembled display controlling program 51, which is an application program installed in the computer system and able to jointly activate the multimedia display program 42 and the display frame setup program 43, in order to enable a quicker and smooth display frame setup operation.

In view of the foregoing, the assembled display device and the display frame control method and system thereof enable the image division process to be performed by the graphic controllers to share the workload of the central processing unit (CPU), so as to achieve the objective of performing the image division function via a single computer system. The present invention not only helps the reduction in system construction costs, but also the increase in the system maintenance for the convenience.

Although the invention has been disclosed and illustrated with reference to particular embodiments, the principles involved are susceptible for use in numerous other embodiments that will be apparent to persons skilled in the art. This invention is, therefore, to be limited only as indicated by the scope of the appended claims.

## Claims

1. A display frame control method, which is applied to an assembled display device in a computer system, the assembled display device at least comprising a graphic controller (251, 252, 253, 254) for outputting image data to a display screen (31) having a resolution of a screen height, H, and screen width, W, in pixels, the graphic controller (251, 252, 253, 254) having a buffer memory (2510), a decoder (2511) and an individual screen area zooming module (2512), the display frame control method comprising the steps of:
first installing (S100) a display frame setup program (43) in the computer system;
activating (S102), after the step of installing (S100) the display frame setup program (43), the display frame setup program (43) to acquire a setup command, which comprises information of a specific area (310) of a display frame content corresponding to the image data, wherein the height and/or width of the specific area is smaller than the height, H, and width, W, of the display screen;
controlling (S104), after the step of activating (S102) the display frame setup program (43), a graphic driving program (441, 442, 443, 444) to assemble a control signal in order to output the control signal to the graphic controller based on the setup command; and
**characterized by** the further steps (S106), after the step of controlling (S104) the graphic driving program, of
the graphic controller (251, 252, 253, 254)
temporarily storing the image data in the buffer memory (2510);
retrieving, by the decoder (2511), the image data from the buffer memory (2510); decoding, by the decoder (2511), the image data into a plurality of original frame data, and temporarily storing the original frame data in the buffer memory (2510);
acquiring, by the screen area zooming module (2512), the plurality of original frame data;
retrieving, by the screen area zooming module (2512), image data corresponding to the specific area (310) according to the information of the control signal; performing, by the screen area zooming module (2512), a zooming process on the specific area (310), so that the specific area is enlarged and expanded to the full display screen, thereby transforming the plurality of original frame data to a plurality of target frame data; and
temporarily storing the plurality of target frame data and outputting the plurality of target frame data to the display screen (31).

2. The display frame control method according to claim 1, wherein before the step of activating the display frame setup program (43) comprising the further steps of:
installing a multimedia display program (42) in the computer system;
activating the multimedia display program (42) to acquire an image projection command; and
controlling the graphic driving program (441, 442, 443, 444) to activate the graphic controller (251, 252, 253, 254) in order to output the image data to the display screens based on the image projection command.

3. The display frame control method according to claim 2, further comprising the steps of:
installing an assembled display controlling program in the computer system; and
activating the assembled display controlling program (51) to activate the multimedia display program (42) and the display frame setup program (43).

4. The display frame control method according to claim 1, wherein the computer system has an operating system (41) installed inside, the graphic driving program (441, 442, 443, 444) being installed in the operating system (41), the operating system (41) has an application programming interface, API; the step of controlling the graphic driving program (441,442,443,444) to assemble the control signal in order to output the control signal to graphic controllers (251, 252, 253, 254) based on the setup command further comprising the following steps:
responding to the acquired setup command by the display frame setup program (43); and
generating a system call in order to control the graphic driving program (441, 442, 443, 444) to assemble the control signal from the graphic driving program to be outputted to the graphic controller (251, 252, 253, 254) through the application programming interface, API.

5. The display frame control method according to claim 1, wherein the setup command has the information on location coordinates and dimensions of the specific area (310).

6. A display frame control system to control at least a display screen, the display frame control system comprising a computer system and further comprising at least:
a graphic controller (251, 252, 253, 254) being coupled with a display screen (31) and having a buffer memory (2510), a decoder (2511) and an individual screen area zooming module (2512), the display screen (31) having a resolution of a screen height, H, and screen width, W, in pixels;
a graphic driving program (441, 442, 443, 444) being installed in the computer system to activate the graphic controller (251, 252, 253, 254);
a multimedia display program (42) being installed in the computer system to control the graphic driving program (441, 442, 443, 444) to activate the graphic controller (251, 252, 253, 254) for the outputting image data to the display frame; and
a display frame setup program (43) being installed in the computer system to acquire a setup command, which comprises information of a specific area (310) of a display frame content corresponding to the image data, wherein a height and/or width of the specific area (310) is smaller than the height, H, and width, W, of the display screen (31), and the display frame setup program (43) controlling the graphic driving program (441, 442, 443,444) to assemble a control signal in order to output the control signal to the graphic controller (251, 252, 253, 254) based on the setup command;
**characterized in that** the graphic controller (251, 252, 253, 254) comprises means to
temporarily store the image data in the buffer memory (2510);
retrieve, by the decoder (2511), the image data from the buffer memory (2510); decode, by the decoder (2511), the image data into a plurality of original frame data, and temporarily stores the original frame data in the buffer memory (2510); acquire, by the screen area zooming module (2512), the plurality of original frame data;
retrieve, by the screen area zooming module (2512), image data corresponding to the specific area (310) according to the information of the control signal; perform, by the screen area zooming module (2512), a zooming process on the specific area (310), so that the specific area is enlarged and expanded to the full display screen, thereby transforming the plurality of original frame data to a plurality of target frame data; and
temporarily store the plurality of target frame data and outputs the plurality of target frame data to the display screen (31).

7. The display frame control system according to claim 6, wherein the computer system has an operating system (41) installed inside, the graphic driving program (441, 442, 443, 444) being installed in the operating system (41), the operating system (41) has an application programming interface, API, the display frame setup program (43) responding to the acquired setup command and generating a system call in order to control the graphic driving program (441, 442, 443, 444) to assemble the control signal from the graphic driving program (441, 442, 443, 444) to be outputted to the graphic controller (251, 252, 253, 254) through the application programming interface, API.

8. The display frame control system according to claim 6, wherein the graphic controller (251,252,253,254) comprises:
a buffer memory (2510) for temporarily storing the image data;
a decoder (2511) for accessing the image data from the buffer memory (2510), decoding the image data into original frame data and outputting the frame data to the buffer memory (2510) for temporary storage;
a screen area zooming module (2512) for accessing the original frame data from the buffer memory (2510), and transforming the original frame data into target frame data, then outputting the target frame data to the buffer memory (2510) for temporary storage based on the control signal; and
an encoder (2513) for accessing the target frame data from the buffer memory (2510), and outputting the target frame data to the display after encoding the target frame data.

9. The display frame control system according to claim 6, wherein the graphic controller (251, 252, 253, 254) comprises means adapted to, based on the control signal, expand the specific area (310) of the display frame to a full-screen mode in conformity with the display frame.

10. The display frame control system according to claim 6, wherein the setup command has the information on location coordinates and dimensions of the specific area (310).

11. The display frame control system according to claim 6, further comprising at least one display screen (31).

## Patentansprüche

1. Anzeigeframe-Steuerungsverfahren, welches bei einem zusammengefügte-Anzeige-Gerät in einem Computersystem angewandt wird, wobei das zusammengefügte-Anzeige-Gerät zumindest eine Grafiksteuerung (251, 252, 253, 254) umfasst, um Bilddaten an einem Anzeigebildschirm (31) auszugeben, der eine Auflösung mit einer Bildschirmhöhe, H, und Bildschirmbreite, W, in Pixeln, aufweist, wobei die Grafiksteuerung (251, 252, 253, 254) einen Pufferspeicher (2510), einen Decoder (2511) und ein individuelles Bildschirmbereich-Zoommodul (2512) aufweist, wobei das Anzeigeframe-Steuerungsverfahren die Schritte umfasst von:
zunächst Installieren (S100) eines Anzeigeframe-Konfigurationsprogramms (43) in dem Computersystem;
Aktivieren (S102), nach dem Schritt des Installierens (S100) des Anzeigeframe-Konfigurationsprogramms (43), des Anzeigeframe-Konfigurationsprogramms (43), um eine Konfigurationsanweisung zu erlangen, welche Informationen eines spezifischen Bereichs (310) eines den Bilddaten entsprechenden Anzeigeframe-Inhalts umfasst, wobei die Höhe und/oder Breite des spezifischen Bereichs kleiner ist als die Höhe, H, und Breite, W, des Anzeigebildschirms;
Steuern (S104), nach dem Schritt des Aktivierens (S102) des Anzeigeframe-Konfigurationsprogramms (43), eines Grafiktreiberprogramms (441, 442, 443, 444), um ein Steuersignal zusammenzufügen, um das Steuersignal an die Grafiksteuerung basierend auf der Konfigurationsanweisung auszugeben; und
**gekennzeichnet durch** die weiteren Schritte (S106) der Grafiksteuerung (251, 252, 253, 254), nach dem Schritt des Steuerns (S104) des Grafiktreiberprogramms, von zeitweise Speichern der Bilddaten in dem Pufferspeicher (2510);
Abrufen, durch den Decoder (2511), der Bilddaten von dem Pufferspeicher (2510); Decodieren, durch den Decoder (2511), der Bilddaten in eine Vielzahl ursprünglicher Framedaten, und zeitweise Speichern der ursprünglichen Framedaten in dem Pufferspeicher (2510);
Erlangen, durch das Bildschirmbereich-Zoommodul (2512), der Vielzahl ursprünglicher Framedaten;
Abrufen, durch das Bildschirmbereich-Zoommodul (2512), von dem spezifischen Bereich (310) entsprechenden Bilddaten, gemäß der Informationen des Steuersignals; Durchführen, durch das Bildschirmbereich-Zoommodul (2512), eines Zoomprozesses auf dem spezifischen Bereich (310), so dass der spezifische Bereich vergrößert wird und erweitert wird, auf den gesamten Anzeigebildschirm, und damit Transformieren der Vielzahl ursprünglicher Framedaten in eine Vielzahl von Zielframedaten; und
zeitweise Speichern der Vielzahl von Zielframedaten und Ausgeben der Vielzahl von Zielframedaten an den Anzeigebildschirm (31).

2. Anzeigeframe-Steuerungsverfahren gemäß Anspruch 1, wobei vor dem Schritt des Aktivierens des Anzeigeframe-Konfigurationsprogramms (43) die weiteren Schritte umfasst sind von:
Installieren eines Multimediaanzeigeprogramms (42) in dem Computersystem;
Aktivieren des Multimediaanzeigeprogramms (42), um eine Bildprojektionsanweisung zu erlangen; und
Steuern des Grafiktreiberprogramms (441, 442, 443, 444), die Grafiksteuerung (251, 252, 253, 254) zu aktivieren, um die Bilddaten basierend auf der Bildprojektionsanweisung an die Anzeigebildschirme auszugeben.

3. Anzeigeframe-Steuerungsverfahren gemäß Anspruch 2, weiter umfassend die Schritte von:
Installieren eines zusammengefügte-Anzeige-Steuerungsprogramms in dem Computersystem; und
Aktivieren des zusammengefügte-Anzeige-Steuerungsprogramms (51), um das Multimediaanzeigeprogramm (42) und das Anzeigeframe-Konfigurationsprogramm (43) zu aktivieren.

4. Anzeigeframe-Steuerungsverfahren gemäß Anspruch 1, wobei das Computersystem ein Betriebssystem (41) im Inneren installiert aufweist, wobei das Grafiktreiberprogramm (441, 442, 443, 444) in dem Betriebssystem (41) installiert ist, wobei das Betriebssystem (41) eine Anwendungsprogrammierschnittstelle, API, aufweist, wobei der Schritt des Steuerns des Grafiktreiberprogramms (441, 442, 443, 444) das Steuersignal zusammenzufügen, um das Steuersignal an Grafiksteuerungen (251, 252, 253, 254) basierend auf der Konfigurationsanweisung auszugeben, weiter die folgenden Schritte umfasst:
Reagieren auf die erlangte Konfigurationsanweisung durch das Anzeigeframe-Konfigurationsprogramm (43); und
Erzeugen eines Systemaufrufs, um das Grafiktreiberprogramm (441, 442, 443, 444) zu steuern, das Steuersignal von dem Grafiktreiberprogramm zusammenzufügen, um an die Grafiksteuerung (251, 252, 253, 254) durch die Anwendungsprogrammierschnittstelle, API, ausgegeben zu werden.

5. Anzeigeframe-Steuerungsverfahren gemäß Anspruch 1, wobei die Konfigurationsanweisung die Informationen über Ortskoordinaten und Dimensionen des spezifischen Bereichs (310) aufweist.

6. Anzeigeframe-Steuerungssystem um mindestens einen Anzeigebildschirm zu steuern, wobei das Anzeigeframe-Steuerungssystem ein Computersystem umfasst und weiter zumindest umfasst:
eine Grafiksteuerung (251, 252, 253, 254), die mit einem Anzeigebildschirm (31) gekoppelt ist und einen Pufferspeicher (2510), einen Decoder (2511) und ein individuelles Bildschirmbereich-Zoommodul (2512) aufweist, wobei der Anzeigebildschirm (31) eine Auflösung mit einer Bildschirmhöhe, H, und Bildschirmbreite, W, in Pixeln, aufweist;
ein Grafiktreiberprogramm (441, 442, 443, 444), das in dem Computersystem installiert ist, um die Graphiksteuerung (251, 252, 253, 254) zu aktivieren;
ein Multimediaanzeigeprogramm (42), das in dem Computersystem installiert ist, um das Grafiktreiberprogramm (441, 442, 443, 444) zu steuern, die Grafiksteuerung (251, 252, 253, 254) zu aktivieren, um Bilddaten an den Anzeigeframe auszugeben; und
ein Anzeigeframe-Konfigurationsprogramm (43), das in dem Computersystem installiert ist, um eine Konfigurationsanweisung zu erlangen, welche Informationen eines spezifischen Bereichs (310) eines den Bilddaten entsprechenden Anzeigeframe-Inhalts umfasst, wobei eine Höhe und/oder Breite des spezifischen Bereichs (310) kleiner ist als die Höhe, H, und Breite, W, des Anzeigebildschirms (31), und wobei das Anzeigeframe-Konfigurationsprogramm (43) das Grafiktreiberprogramm (441, 442, 443, 444) steuert, ein Steuersignal zusammenzufügen, um das Steuersignal an die Grafiksteuerung (251, 252, 253, 254) auszugeben, basierend auf der Konfigurationsanweisung;
**dadurch gekennzeichnet, dass** die Graphiksteuerung (251, 252, 253, 254) Mittel umfasst, um
die Bilddaten in dem Pufferspeicher (2510) zeitweise zu speichern;
die Bilddaten von dem Pufferspeicher (2510) durch den Decoder (2511) abzurufen;
die Bilddaten durch den Decoder (2511) in eine Vielzahl ursprünglicher Framedaten zu decodieren, und die ursprünglichen Framedaten in dem Pufferspeicher (2510) zeitweise zu speichern;
die Vielzahl ursprünglicher Framedaten durch das Bildschirmbereich-Zoommodul (2512) zu erlangen;
dem spezifischen Bereich (310) entsprechende Bilddaten durch das Bildschirmbereich-Zoommodul (2512) abzurufen, gemäß der Informationen des Steuersignals;
einen Zoomprozess auf dem spezifischen Bereich (310) durch das Bildschirmbereich-Zoommodul (2512) durchzuführen, so dass der spezifische Bereich vergrößert wird und erweitert wird, auf den gesamten Anzeigebildschirm, und damit die Vielzahl ursprünglicher Framedaten in eine Vielzahl von Zielframedaten transformiert wird; und
die Vielzahl von Zielframedaten zeitweise zu speichern und die Vielzahl von Zielframedaten an den Anzeigebildschirm (31) auszugeben.

7. Anzeigeframe-Steuerungssystem gemäß Anspruch 6, wobei das Computersystem ein Betriebssystem (41) im Inneren installiert aufweist, wobei das Grafiktreiberprogramm (441, 442, 443, 444) in dem Betriebssystem (41) installiert ist, wobei das Betriebssystem (41) eine Anwendungsprogrammierschnittstelle, API, aufweist, wobei das Anzeigeframe-Konfigurationsprogramm (43) auf die erlangte Konfigurationsanweisung reagiert und einen Systemaufruf erzeugt, um das Grafiktreiberprogramm (441, 442, 443, 444) zu steuern, das Steuersignal von dem Grafiktreiberprogramm (441, 442, 443, 444) zusammenzufügen, um an die Grafiksteuerung (251, 252, 253, 254) durch die Anwendungsprogrammierschnittstelle, API, ausgegeben zu werden.

8. Anzeigeframe-Steuerungssystem gemäß Anspruch 6, wobei die Grafiksteuerung (251, 252, 253, 254) umfasst:
einen Pufferspeicher (2510) zum zeitweisen Speichern der Bilddaten;
einen Decoder (2511) zum Zugreifen auf die Bilddaten aus dem Pufferspeicher (2510), der die Bilddaten in ursprüngliche Framedaten decodiert und die Framedaten an den Pufferspeicher (2510) zur zeitweisen Speicherung ausgibt;
ein Bildschirmbereich-Zoommodul (2512) zum Zugreifen auf die ursprünglichen Framedaten aus dem Pufferspeicher (2510) und zum Transformieren der ursprünglichen Framedaten in Zielframedaten, und dann Ausgeben der Zielframedaten an den Pufferspeicher (2510) zur zeitweisen Speicherung, basierend auf dem Steuersignal; und
einen Codierer (2513) zum Zugreifen auf die Zielframedaten aus dem Pufferspeicher (2510) und zum Ausgeben der Zielframedaten an den Bildschirm nach Codieren der Zielframedaten.

9. Anzeigeframe-Steuerungssystem gemäß Anspruch 6, wobei die Grafiksteuerung (251, 252, 253, 254) Mittel umfasst, die angepasst sind, basierend auf dem Steuersignal, den spezifischen Bereich (310) des Anzeigeframes auf einen Vollbildmodus in Übereinstimmung mit dem Anzeigeframe zu erweitern.

10. Anzeigeframe-Steuerungssystem gemäß Anspruch 6, wobei die Konfigurationsanweisung die Informationen über Ortskoordinaten und Dimensionen des spezifischen Bereichs (310) aufweist.

11. Anzeigeframe-Steuerungssystem gemäß Anspruch 6, weiter mindestens einen Anzeigebildschirm (31) umfassend.

## Revendications

1. Procédé de commande de cadre d'affichage, lequel est appliqué à un dispositif d'affichage assemblé dans un système informatique, le dispositif d'affichage assemblé comprenant au moins un contrôleur graphique (251, 252, 253, 254) pour faire sortir des données d'image à l'attention d'un écran d'affichage (31) ayant une résolution d'une hauteur d'écran H et d'une largeur d'écran W, en pixels, le contrôleur graphique (251, 252, 253, 254) ayant une mémoire tampon (2510), un décodeur (2511) et un module de zoom de zone d'écran individuelle (2512), le procédé de commande de cadre d'affichage comprenant les étapes suivantes :
d'abord l'installation (S100) d'un programme d'installation de cadre d'affichage (43) dans le système informatique ;
l'activation (S102), après l'étape d'installation (S100) du programme d'installation de cadre d'affichage (43), du programme d'installation de cadre d'affichage (43) pour acquérir une commande d'installation qui comprend de l'information d'une zone spécifique (310) d'un contenu du cadre d'affichage correspondant aux données d'image, dans lequel la hauteur et/ou largeur de la zone spécifique est inférieure à la hauteur H et la largeur W de l'écran d'affichage ;
la commande (S104), après l'étape d'activation (S102) du programme d'installation de cadre d'affichage (43), d'un programme de pilotage graphique (441, 442, 443, 444) pour assembler un signal de commande afin de faire sortir le signal de commande à l'attention du contrôleur graphique sur la base de la commande d'installation ; et
**caractérisé par** les autres étapes (S106), après l'étape de commande (S104) du programme de pilotage graphique, de
stockage temporaire par le contrôleur graphique (251, 252, 253, 254) des données d'image dans la mémoire tampon (2510) ;
récupération, par le décodeur (2511), des données d'image de la mémoire tampon (2510) ;
décodage, par le décodeur (2511), des données d'image en une pluralité de données de cadre d'origine, et stockage temporaire des données de cadre d'origine dans la mémoire tampon (2510) ;
acquisition, par le module de zoom de zone d'écran (2512), de la pluralité des données de cadre d'origine ;
récupération, par le module de zoom de zone d'écran (2512), de données d'image correspondant à la zone spécifique (310) en fonction de l'information du signal de commande ;
réalisation, par la module de zoom de zone d'écran (2512), d'un processus consistant à zoomer sur la zone spécifique (310) de sorte que la zone spécifique soit agrandie et élargie à l'écran d'affichage complet en transformant de la sorte la pluralité de données de cadre d'origine en une pluralité de donnée de cadre cible ; et
stockage temporaire de la pluralité de données de cadre cible et sortie de la pluralité de données de cadre cible à l'attention de l'écran d'affichage (31).

2. Procédé de commande de cadre d'affichage selon la revendication 1, dans lequel, avant l'étape d'activation du programme d'installation de cadre d'affichage (43), comprenant les étapes suivantes : installation d'un programme d'affichage multimédia (42) dans le système informatique ;
activation du programme d'affichage multimédia (42) pour acquérir une commande de projection d'image ; et
commande du programme de pilotage graphique (441, 442, 443, 444) pour activer le contrôleur graphique (251, 252, 253, 254) pour faire sortir les données d'image à l'attention des écrans d'affichage sur la base de la commande de projection d'image.

3. Procédé de commande de cadre d'affichage selon la revendication 2, comprenant en outre les étapes suivantes :
l'installation d'un programme de commande d'affichage assemblé dans le système informatique ; et
l'activation du programme de commande d'affichage assemblé (51) pour activer le programme d'affichage multimédia (42) et le programme d'installation de cadre d'affichage (43).

4. Procédé de commande de cadre d'affichage selon la revendication 1, dans lequel le système informatique a un système d'exploitation (41) installé dedans, le programme de pilotage graphique (441, 442, 443, 444) étant installé dans le système d'exploitation (41), le système d'exploitation (41) ayant une interface de programmation d'application, API ; l'étape de commande du programme de pilotage graphique (441, 442, 443, 444) pour assembler le signal de commande afin de faire sortir le signal de commande à l'attention de contrôleurs graphiques (251, 252, 253, 254) sur la base de la commande d'installation comprenant en outre les étapes suivantes :
la réponse à la commande d'installation acquise par le programme d'installation de cadre d'affichage (43) : et
la génération d'un appel système afin de commander le programme de pilotage graphique (441, 442, 443, 444) pour assembler le signal de commande du programme de pilotage graphique à faire sortir à l'attention du contrôleur graphique (251, 252, 253, 254) via l'interface de programmation d'application, API.

5. Procédé de commande de cadre d'affichage selon la revendication 1, dans lequel la commande d'installation a l'information sur des coordonnées d'emplacement et dimensions de la zone spécifique (310).

6. Système de commande de cadre d'affichage pour commander au moins un écran d'affichage, le système de commande de cadre d'affichage comprenant un système informatique et comprenant en outre au moins :
un contrôleur graphique (251, 252, 253, 254) couplé avec un écran d'affichage (31) et ayant une mémoire tampon (2510), un décodeur (2511) et un module de zoom de zone d'écran individuelle (2512), l'écran d'affichage (31) ayant une résolution d'une hauteur d'écran H et d'une largeur d'écran W, en pixels ;
un programme de pilotage graphique (441, 442, 443, 444) installé dans le système informatique pour activer le contrôleur graphique (251, 252, 253, 254) ;
un programme d'affichage multimédia (42) installé dans le système informatique pour commander le programme de pilotage informatique (441, 442, 443, 444) pour activer le contrôleur graphique (251, 252, 253, 254) pour faire sortir des données d'image à l'attention du cadre d'affichage ; et
un programme d'installation de cadre d'affichage (43) installé dans le système informatique pour acquérir une commande d'installation qui comprend de l'information d'une zone spécifique (310) d'un contenu de cadre d'affichage correspondant aux données d'image, dans lequel une hauteur et/ou une largeur de la zone spécifique (310) est inférieure à la hauteur H et la largeur W de l'écran d'affichage (31), et le programme d'installation de cadre d'affichage (43) commandant le programme de pilotage graphique (441, 442, 443, 444) pour assembler un signal de commande afin de faire sortir le signal de commande à l'attention du contrôleur graphique (251, 252, 253, 254) sur la base de la commande d'installation :
**caractérisé en ce que** la contrôleur graphique (251, 252, 253, 254) comprend des moyens pour stocker temporairement les données d'image dans la mémoire tampon (2510) ;
récupérer, par le décodeur (2511), les données d'image de la mémoire tampon (2510) ;
décoder, par le décodeur (2511), les données d'image en une pluralité de données de cadre d'origine, et stocker temporairement les données de cadre d'origine dans la mémoire tampon (2510) ;
acquérir, par le module de zoom de zone d'écran (2512), la pluralité des données de cadre d'origine ;
récupérer, par le module de zoom de zone d'écran (2512), les données d'image correspondant à la zone spécifique (310) en fonction de l'information du signal de commande ;
réaliser, par le module de zoom de zone d'écran (2512), un processus consistant à zoomer sur la zone spécifique (310) de sorte que la zone spécifique est agrandie et élargie à l'écran d'affichage complet en transformant de la sorte la pluralité de données de cadre d'origine en une pluralité de données de cadre cible ; et
stocker temporairement la pluralité de données de cadre cible et faire sortir la pluralité de données de cadre cible à l'attention de l'écran d'affichage (31).

7. Système de commande de cadre d'affichage selon la revendication 6, dans lequel le système informatique a un système d'exploitation (41) installé dedans, le programme de pilotage graphique (441, 442, 443, 444) étant installé dans le système d'exploitation (41), le système d'exploitation (41) a une interface de programmation d'application, API, le programme d'installation de cadre d'affichage (43) répondant à la commande d'installation acquise et générant un appel système afin de commander le programme de pilotage graphique (441, 442, 443, 444) pour assembler le signal de commande du programme de pilotage graphique (441, 442, 443, 444) à faire sortir à l'attention du contrôleur graphique (251, 252, 253, 254) via l'interface de programmation d'application, API.

8. Système de commande de cadre d'affichage selon la revendication 6, dans lequel le contrôleur graphique (251, 252, 253, 254) comprend :
une mémoire tampon (2510) pour stocker temporairement les données d'image ;
un décodeur (2511) pour accéder aux données d'image de la mémoire tampon (2510), décoder les données d'image en données de cadre d'origine et faire sortir les données de cadre à l'attention de la mémoire tampon (2510) pour le stockage temporaire ;
un module de zoom de zone d'écran (2512) pour accéder aux données de cadre d'origine de la mémoire tampon (2510) et transformer les données de cadre d'origine en données de cadre cible, ensuite faire sortir les données de cadre cible à l'attention de la mémoire tampon (2510) pour un stockage temporaire sur la base du signal de commande ; et
un encodeur (2513) pour accéder aux données de cadre cible de la mémoire tampon (2510) et faire sortir les données de cadre cible à l'attention de l'afficheur après le codage des données de cadre cible.

9. Système de commande de cadre d'affichage selon la revendication 6, dans lequel le contrôleur graphique (251, 252, 253, 254) comprend des moyens adaptés pour, sur la base du signal de commande, élargir la zone spécifique (310) du cadre d'affichage à un mode plein écran en conformité avec le cadre d'affichage.

10. Système de commande de cadre d'affichage selon la revendication 6, dans lequel la commande d'installation a l'information sur des coordonnées d'emplacement et des dimensions de la zone spécifique (310).

11. Système de commande de cadre d'affichage selon la revendication 6, comprenant en outre au moins un écran d'affichage (31).
